# EUROPÄISCHE PATENTSCHRIFT

(11) **EP 0 914 475 B1**
(45) Veröffentlichungstag und Bekanntmachung des Hinweises auf die Patenterteilung: **06.06.2001**
(21) Anmeldenummer: 97928042.7
(22) Anmeldetag: 26.06.1997
(51) Int. Cl.: C21B 13/14

(54) **VERFAHREN ZUM HERSTELLEN VON FLÜSSIGEM ROHEISEN ODER FLÜSSIGEN STAHLVORPRODUKTEN**
METHOD OF PRODUCING LIQUID PIG IRON OR LIQUID STEEL PRECURSORS
PROCEDE DE PRODUCTION DE FONTE BRUTE LIQUIDE OU DE PRECURSEURS D'ACIER LIQUIDES

(30) Priorität: 28.06.1996 AT 115496
(43) Veröffentlichungstag der Anmeldung: 12.05.1999
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Leopold, Werner, A-4060 Leonding (AT); WALLNER, Felix, A-4020 Linz (AT); SCHENK, Johannes, A-4040 Linz (AT); LEE, Il-Ock, Jikok-dong Nam-gu Pohang 790-390 (KR); KIM, Yong-Ha, Jikok-dong Nam-gu Pohang 790-390 (KR); PARK, Moon, Duk, 102-1303, Doo-ho Dong Pohang City (KR)
(74) Vertreter: Kopecky, Helmut, Dipl.-Ing.
(86) Internationale Anmeldenummer: AT9700143
(87) Internationale Veröffentlichungsnummer: WO9802586

(56) Entgegenhaltungen:
- EP-A- 0 316 819
- EP-A- 0 594 557
- DE-C- 4 240 194
- PATENT ABSTRACTS OF JAPAN vol. 012, no. 213 (C-505), 17.Juni 1988 & JP 63 011611 A (NIPPON STEEL CORP), 19.Januar 1988,
- PATENT ABSTRACTS OF JAPAN vol. 013, no. 472 (C-647), 25.Oktober 1989 & JP 01 184211 A (NIPPON STEEL CORP), 21.Juli 1989,
- PATENT ABSTRACTS OF JAPAN vol. 096, no. 007, 31.Juli 1996 & JP 08 060215 A (KAWASAKI HEAVY IND LTD), 5.März 1996,

## Beschreibung

Die Erfindung betrifft ein Verfahren zum Herstellen von flüssigem Roheisen oder flüssigen Stahlvorprodukten aus von Eisenerz und Zuschlägen gebildeten, zumindest teilweise einen Feinanteil aufweisenden Einsatzstoffen, wobei das Eisenerz in mindestens zwei Reduktionsstufen im Wirbelschichtverfahren zu Eisenschwamm direkt reduziert wird, der Eisenschwamm in einer Einschmelzvergasungszone unter Zufuhr von Kohlenstoffträgern und sauerstoffhältigem Gas erschmolzen und ein CO- und H₂-hältiges Reduktionsgas erzeugt wird, welches in Reduktionszonen der Reduktionsstufen eingeleitet, dort umgesetzt, als Topgas abgezogen und gegebenenfalls einem Verbraucher zugeführt wird, sowie eine Anlage zur Durchführung des Verfahrens.

Ein Verfahren zum Reduzieren von Erz mit nachfolgendem Einschmelzen ist beispielsweise aus der EP-A - 0 594 557 bekannt. Bei diesem bekannten Verfahren wird gemäß einer bevorzugten Ausführungsform die Reduktion in zwei örtlich getrennten, in Serie geschalteten Reduktionszonen durchgeführt, wobei das Reduktionsgas, das aus der ersten Reduktionszone austritt, der zweiten, der ersten im Sinne des Feinerzflusses vorgeordneten Reduktionszone, also im Gegenstrom, zugeleitet und von dieser unter Druckverdichtung einer Vorwärmzone zugeführt wird. Jede der beiden Reduktionszonen weist einen oberen Abschnitt auf, in dem feine Feststoffteilchen in einem Wirbelbett reduziert werden, und einen unteren Abschnitt, in den gröbere Feststoffteilchen absinken und in einem durchströmten Festbett reduziert werden.

Hierdurch ergeben sich gegenüber einer einstufigen Direktreduktion, also einer Direktreduktion mit nur einer einzigen Reduktionszone, Vorteile, die vor allem in einem niedrigen Reduktionsgasverbrauch zu sehen sind, u.zw. aus folgendem Grund: Technische Reduktionsprozesse erfordern eine Reduktionstemperatur von mindestens 750°C, so daß sich zwangsläufig eine minimale Temperatur des Reduktionsgases - beim Austritt aus der Reduktionszone - von 750° ergibt.

Da das Reduktionsgas aus dem Einschmelzvergaser aus technischen Gründen nicht Temperaturen über 950°C haben darf, steht nur ein Temperaturgefälle von etwa 200°C zur Verfügung, d.h. daß nur etwa 1/3 der fühlbaren Wärme des Reduktionsgases genutzt werden kann. Um das oben angegebene Temperaturniveau halten zu können, müßte bei einem einstufigen Reduktionsprozeß eine mehrfache Reduktionsgasmenge, als zur Reduktion benötigt wird, verwendet werden. Hierdurch ergäbe sich eine unzureichende Ausnutzung des Reduktionsgases und damit auch ein hoher Kohleverbrauch im Einschmelzvergaser.

Trotzdem sich dieses bekannte Verfahren bewährt hat, kann es bei der Verarbeitung von Erzen mit unterschiedlichen Korngrößen, d.h. bei der Verarbeitung von Erzen mit einem etwas höheren Feinerzanteil (z.B. Run of mine-Erz), zu unterschiedlichen Reduktionsgraden zwischen der Feinkornfraktion und der Grobkornfraktion des Eisenerzes kommen. Eine Abhilfe ist schwierig, da es bei diesem bekannten Verfahren nicht möglich ist, in den Reaktorbehältern die Verweilzeit der Feinkornfraktion unabhängig von der Verweilzeit des Grobkornfraktion des Eisenerzes einzustellen.

Bei dem bekannten Verfahren wird der fertigreduzierte Feinerzanteil aus der der Einschmelzvergasungszone unmittelbar vorgeordneten Reduktionszone abgesondert vom Groberzanteil in die Einschmelzvergasungszone eingebracht, u.zw. in Höhe des sich über dem Festbett der Einschmelzvergasungszone ausbildenden Fließbettes. Hierdurch wird ein Ausfördern der Feinkornfraktion mit dem in der Einschmelzvergasungszone gebildeten Reduktionsgas vermieden. Bei Überlastung des Fließbettes durch die eingebrachte Feinkornfraktion kann es zum Zusammenbruch des Fließbettes und in der Folge zu einem Gasstau kommen. Die Folge davon sind eruptive Gasausbrüche. Hierdurch wird der Vergasungsprozeß für die Kohlenstoffträger und der Einschmelzprozeß für das reduzierte Eisenerz, d.h. den Eisenschwamm, stark gestört. Es kann zu unkontrollierbaren Druckschwankungen und Mengenschwankungen des erzeugten Reduktionsgases und zur Bildung von Reduktionsgas mit für den Reduktionsprozeß nachteiligen Reduktanten-Zusammensetzungen kommen.

Aus der KR-Patentanmeldung 94-38980 ist ein Verfahren der eingangs beschriebenen Art bekannt, bei dem in der der Einschmelzvergasungszone unmittelbar vorgeordneten Reduktionszone der vorreduzierte Feinerzanteil mit Hilfe des Reduktionsgases ausgetragen und einer separaten Feinerz-Reduktionszone zugeführt wird. Aus dieser wird das fertigreduzierte Feinerz ebenfalls wie gemäß der EP-A - 0 594 557 der Fließbettzone im Einschmelzvergaser zugeleitet, so daß es hier zu den oben bereits beschriebenen Störungen im Einschmelzvergaser kommen kann.

Gemäß der KR-Patentanmeldung 94-38980 wird das Erz in einer ersten Reduktionszone vorreduziert, wobei der Feinerzanteil und der Groberzanteil gemeinsam in einer einzigen Reduktionszone reduziert werden. Hierdurch ergeben sich die für die EP-A - 0 594 557 beschriebenen Nachteile, nämlich die ungleichmäßigen Reduktionsgrade des Feinerzanteiles und des Groberzanteiles in dieser Reduktionszone.

Die Erfindung bezweckt die Vermeidung dieser Nachteile und Schwierigkeiten und stellt sich die Aufgabe, ein Verfahren der eingangs beschriebenen Art sowie eine Anlage zur Durchführung des Verfahrens zu schaffen, mit dem nicht nur eine gleichmäßige Reduktion des Feinanteiles und Grobanteiles des Erzes durchführbar ist, u.zw. in einem zwecks guter Gasausnutzung des Reduktionsgases mehrstufigen, d.h. mindestens zweistufigen, Reduktionsverfahren. Insbesondere sollen hierbei auch Störungen des Einschmelzprozesses und des Erzeugungsprozesses für das Reduktionsgas in der Einschmelzvergasungszone vermieden werden.

Diese Aufgabe wird erfindungsgemäß für ein Verfahren der eingangs beschriebenen Art dadurch gelöst,
- daß jede der beiden Reduktionsstufen zwei gesonderte Wirbelschichten aufweist, wobei in einer ersten Reduktionsstufe das Eisenerz mit Hilfe des Reduktionsgases in mindestens zwei Fraktionen mit jeweils unterschiedlichen Korngrößenverteilungen, nämlich in mindestens eine Grobkornfraktion und mindestens eine Feinkornfraktion, fraktioniert wird,
- daß jede Fraktion in einer eigenen Wirbelschicht mit dem Reduktionsgas reduziert wird, wobei
- das Reduktionsgas eine erste, die Grobkornfraktion enthaltende Wirbelschicht aufrecht erhält und aus dieser die Feinkornfraktion abscheidet,
- und wobei weiters in die weitere Wirbelschicht zusätzlich Reduktionsgas direkt eingeleitet wird, u.zw. in einer eine Reduktion der Feinkornfraktion in dieser Wirbelschicht auf einen vorbestimmten Metallisierungsgrad innerhalb einer vorgegebenen Zeitspanne sichernden Menge bzw. chemischen Zusammensetzung, und
- daß reduziertes Eisenerz sowohl aus der ersten als auch aus der weiteren Wirbelschicht ausgetragen wird und
- daß die in der ersten Reduktionsstufe reduzierte Fein- und Grobkornfraktion in einer in gleicher Weise wie die erste Reduktionsstufe arbeitenden weiteren Reduktionsstufe weiterreduziert werden und aus der letzten Reduktionsstufe die Feinkornfraktion in die Einschmelzvergasungszone unter Agglomeration durch Sauerstoffbeistellung, vorzugsweise mittels eines Brenners, zugeführt und die Grobkornfraktion gravitierend in die Einschmelzvergasungszone direkt zugeführt werden.

Das Einbringen einer reduzierten Feinkornfraktion in einen Einschmelzbehälter mittels eines Brenners ist aus der KR-Patentanmeldung 92-27502 an sich bekannt. Die Reduktion mit Reduktionsgas erfolgt hier jedoch einstufig und das Einschmelzen des im einstufigen Verfahren lediglich vorreduzierten Erzes erfolgt nach dem sogenannten "in-bath"-Verfahren. Gemäß diesem Verfahren ist in einem Reaktorbehälter lediglich eine von einer Schlackenschmelze bedeckte Metallschmelze ohne Festbett und ohne Fließbett vorhanden. Die eingebrachte Kohle vergast in der Schlackenschicht, in der auch das eingebrachte vorreduzierte Erz fertigreduziert wird. Das Reduktionsverfahren verläuft jedoch völlig anders als bei dem Verfahren der eingangs beschriebenen Art und gemäß der Erfindung, indem nämlich bei der Vorreduktion aus Fe₂O₃ mit Hilfe von CO und/oder H₂ nur bis maximal zur FeO-Stufe reduziert und das vorreduzierte Erz dann im Einschmelzbehälter mit Hilfe von Kohlenstoff fertigreduziert wird, u.zw. nach der Gleichung FeO + C = Fe + CO. Solche "in-bath"-Schmelzprozesse unterscheiden sich daher grundsätzlich von dem Verfahren der eingangs beschriebenen Art, es wird nämlich eine Reduktion mit Reduktionsgas nur in geringem Maß durchgeführt, u.zw. bis zu einem Reduktionsgrad von etwa 30 %. Für die Fertigreduktion im Einschmelzreaktor wird im Vergleich zum erfindungsgemäßen Verfahren ein hoher Kohlenstoffanteil benötigt, wogegen beim Verfahren der eingangs beschriebenen Art und gemäß der Erfindung eine Reduktion bis zu einem Reduktionsgrad von 90 % oder darüber ausschließlich mit Reduktionsgas durchgeführt wird. Da beim "in-bath"-Verfahren kein Festbett und kein Fließbett vorhanden ist, tritt die der Erfindung zugrundeliegende Problematik des Überlastens des Fließbettes nicht auf.

Gemäß einer bevorzugten Ausführungsform wird erfindungsgemäß in beiden Reduktionsstufen die Korngrößenverteilung der abgeschiedenen Feinkornfraktion in Abhängigkeit der Gesamtkorngrößenverteilung durch Einstellung der pro Zeiteinheit in die erste Wirbelschicht zugeführten Reduktionsgasmenge eingestellt und gleichzeitig der Reduktionsgrad der Feinkornfraktion durch Einstellen der dieser Fraktion zusätzlich direkt zugeführten Menge an Sekundär-Reduktionsgas eingestellt.

Eine vereinfachte Ausführungsform des erfindungsgemäßen Verfahrens sieht vor, daß die in der ersten Reduktionsstufe reduzierte Fein- und Grobkornfraktion gemeinsam in der ersten Wirbelschicht der weiteren Reduktionsstufe weiterreduziert werden und die Feinkornfraktion erneut abgesondert und der weiteren Wirbelschicht zugeführt und dort weiterreduziert wird.

Zweckmäßig wird die in der ersten Reduktionsstufe reduzierte Feinkornfraktion der weiteren Wirbelschicht der weiteren Reduktionsstufe direkt zugeführt und dort weiterreduziert.

Eine weitere vereinfachte Verfahrensvariante des erfindungsgemäßen Verfahrens ist dadurch gekennzeichnet, daß die Feinkornfraktion in die Einschmelzvergasungszone anstatt über einen Brenner in unmittelbarer Nähe einer in die Einschmelzvergasungszone mündenden Sauerstoffeinbringung eingebracht wird.

Eine Anlage zur Durchführung des erfindungsgemäßen Verfahrens mit mindestens zwei in Serie angeordneten Reduktionseinheiten, von denen in einen ersten Reaktorbehälter eine Förderleitung für Eisenerz und Zuschläge enthaltende Einsatzstoffe, eine Gaszuleitung für ein Reduktionsgas sowie eine Förderleitung für das in ihm gebildete Reduktionsprodukt, die zu einer weiteren Reduktionseinheit mit Reaktorbehälter führt, und eine Gasableitung für das Topgas münden, wobei die Gaszuleitung für das Reduktionsgas eine Gasableitung für Reduktionsgas aus der weiteren Reduktionseinheit bildet und eine weitere Förderleitung für das in der weiteren Reduktionseinheit gebildete Reduktionsprodukt in einen Einschmelzvergaser mündet, der Zuleitungen für sauerstoffhältige Gase und Kohlenstoffträger sowie einen Abstich für Roheisen bzw. Stahlvormaterial und Schlacke aufweist, wobei die in die weitere Reduktionseinheit mündende Reduktionsgas-Zuleitung für im Einschmelzvergaser gebildetes Reduktionsgas vom Einschmelzvergaser ausgeht, ist dadurch gekennzeichnet, daß die Reduktionseinheiten jeweils mindestens zwei in Flußrichtung des Eisenerzes in Serie angeordnete Reaktorbehälter aufweisen, die jeweils eine eigene Wirbelschicht enthalten und zu denen jeweils eine Gaszuleitung für das Reduktionsgas in Parallel-Anordnung führt, wobei eine Reduktionsgas-Austragseinrichtung von dem in Flußrichtung des Eisenerzes ersten Reaktorbehälter in den zweiten für die Feinkornfraktion des zu reduzierenden Eisenerzes vorgesehenen Reaktorbehälter derselben Reduktionseinheit führt und von jedem Reaktorbehälter eine Förderleitung für das Reduktionsprodukt ausgeht, und wobei weiters die beiden aus der ersten Reduktionseinheit führenden Förderleitungen in die weitere P.eduktionseinheit münden und die von der weiteren Reduktionseinheit - im Falle, daß diese die letzte Reduktionseinheit bildet - ausgehenden Förderleitungen getrennt zum Einschmelzvergaser führen, u.zw. eine von dem ersten Reaktorbehälter der letzten Reduktionseinheit ausgehende Förderleitung in den Einschmelzvergaser direkt mündet und eine von dem zweiten Reaktorbehälter der letzten Reduktionseinheit ausgehende Förderleitung in den Einschmelzvergaser an einer sauerstoffangereicherten Stelle, vorzugsweise über einen Brenner, mündet.

Gemäß einer bevorzugten Ausführungsform münden die beiden aus der ersten Reduktionseinheit führenden Förderleitungen gemeinsam in die weitere Reduktionseinheit.

Zweckmäßig mündet die aus dem weiteren Reaktorbehälter einer Reduktionseinheit führende Förderleitung direkt in den weiteren Reaktorbehälter der nachgeordneten Reduktionseinheit.

Eine weitere bevorzugte Ausführungsform ist dadurch gekennzeichnet, daß der ersten Reduktionseinheit ein Vorwärmgefäß für das Eisenerz vorgeordnet ist, in das eine Topgas aus der ersten Reduktionseinheit führende Gasleitung mündet.

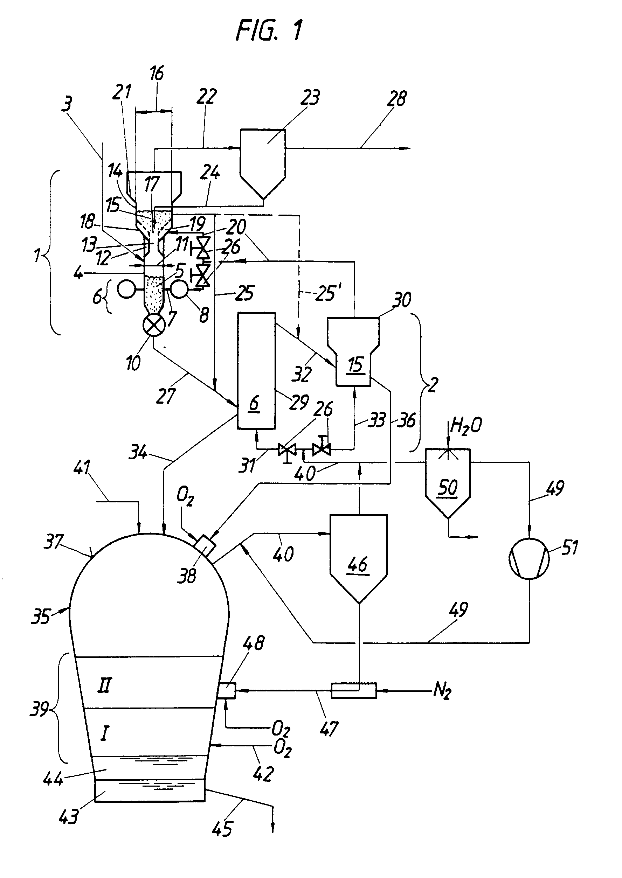

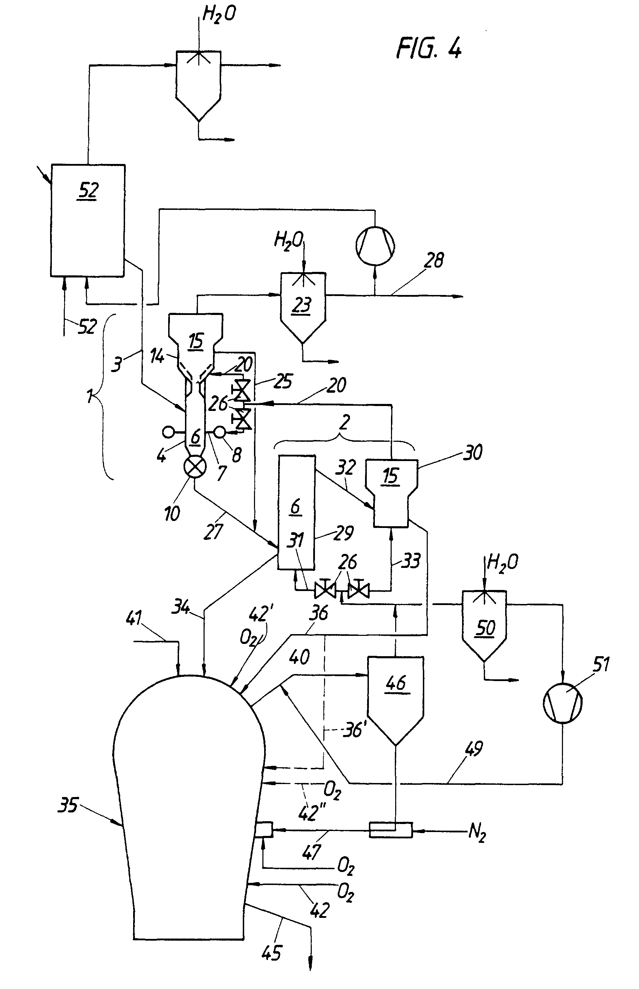

Die Erfindung ist nachfolgend anhand mehrerer Ausführungsbeispiele näher erläutert, wobei die Fig. 1 bis 3 jeweils eine vorteilhafte Ausführungsform einer erfindungsgemäßen Anlage in schematischer Darstellung zeigen. Fig. 4 betrifft ein Ausführungsbeispiel mit einem Einschmelzvergaser gemäß einer abgeänderten Ausführungsform.

Die erfindungsgemäße Anlage gemäß Fig. 1 weist zwei in Serie hintereinander geschaltete Reduktionsstufen bzw. Reduktionseinheiten 1 und 2 auf, wobei Eisenerz - gegebenenfalls mit Zuschlägen versetzt -, das mindestens einen Feinanteil (nachstehend Feinkornfraktion genannt) und einen Grobanteil (nachstehend Grobkornfraktion genannt) aufweist und das gegebenenfalls schon vorgewärmt ist, über eine Erz-Zuleitung 3 der ersten Reduktionseinheit 1 zugeführt wird. In dieser findet eine Vorreduktion und - falls das Eisenerz noch nicht vorgewärmt ist - auch eine Vorerwärmung statt. Diese erste Reduktionseinheit 1 ist wie folgt aufgebaut:

Die Reduktionseinheit 1 weist einen ersten Reaktorbehälter 4 zur Aufnahme einer ersten, aus Eisenerz 5 gebildeten Wirbelschicht 6 auf. Die Wirbelschicht 6 wird durch Reduktionsgas aufrecht erhalten, das über eine Gaszuleitung 7 ausgehend von einer den Reaktorbehälter 4 umgebenden Ringleitung 8 Tadialsymmetrisch zugeführt wird. Die Erz-Zuleitung 3 mündet seitlich in den Reaktorbehälter 4 ein.

Am unteren Ende des sich kegelstumpfförmig verengenden Reaktorbehälters 4 ist eine Austrageinrichtung 10 für vorreduziertes Eisenerz vorgesehen. Am oberen Ende des zweckmäßig einen kreisförmigen Querschnitt 11 aufweisenden ersten Reaktorbehälters 4 ist im Abstand oberhalb der Wirbelschicht 6 eine etwa vertikal ausgerichtete Reduktionsgas-Austragseinrichtung 12 vorgesehen, die einen gegenüber dem Reaktorquerschnitt 11 verengten Querschnitt 13, vorzugsweise ebenfalls kreisförmigen Querschnitt 13, aufweist. Die Austragseinrichtung 12 bildet somit eine düsenartige Verengung. Die vertikale Anordnung der Austragseinrichtung 12 ermöglicht eine Rückförderung von zufällig durch das aufwärts strömende Reduktionsgas mitgerissenen größeren Erzteilchen oder sich während des Reduzierens bildenden Agglomeraten in die Wirbelschicht 6.

Unmittelbar ober dem ersten Reaktorbehälter 4 ist ein weiterer Reaktorbehälter 14 zur Aufnahme einer weiteren Wirbelschicht 15 angeordnet. In diesen weiteren Reaktorbehälter 14, der einen gegenüber dem Querschnitt 11 des ersten Reaktorbehälters 4 größeren Kreisquerschnitt 16 aufweist, mündet die Austrageinrichtung 12 des ersten Reaktorbehälters 4 über eine radialsymmetrisch, d.h. hier zentral angeordnete Gas-Zufuhröffnung 17, durch die das aus dem ersten Reaktorbehälter 4 austretende Reduktionsgas, welches einen Teil des Eisenerzes 5, nämlich den mit einer Korngröße im unteren Bereich der Korngrößenverteilung (Feinkornfraktion), mitreißt, in die Wirbelschicht 15 eintritt und diese aufrecht erhält. Das untere Ende des zweiten Reaktorbehälters 14 ist ebenfalls kegelstumpfförmig ausgebildet, wobei der weitere Reaktorbehälter 14 gegenüber dem ersten Reaktorbehälter 4 kreisringförmig radial auskragt, also mit einer kreisringförmig sich nach außen erstreckenden Erweiterung 18 versehen ist.

An dieser Erweiterung 18 weist der weitere Reaktorbehälter 14 einen radialsymmetrisch angeordneten Gasverteilerboden 19 zur direkten Zuführung eines über eine Gaszuleitung 20 zuströmenden Sekundär-Reduktionsgases auf, das dann zusätzlich mit dem aus dem ersten Reaktorbehälter 4 in den Reaktorbehälter 14 überströmenden Reduktionsgas nicht nur für die Aufrechterhaltung des Wirbelbettes 15 in dem weiteren Reaktorbehälter 14, sondern auch für eine hinreichende Reduktion des in dieser Wirbelschicht 15 vorhandenen Feinerzes 5 sorgt. Hierbei wird zusätzlich das Reduktionspotential des aus dem ersten Reaktorbehälter 4 ausströmenden Reduktionsgases ausgenutzt. Der Gasverteilerboden 19, der als Lochboden, Siebboden, Ventilboden oder Glockenboden od.dgl. ausgebildet sein kann, ist zur zentral angeordneten Gaszuführungsöffnung 17 hin abfallend (etwa kegelstumpfförmig) ausgebildet, so daß größere Erzteilchen oder Agglomerate aus solchen wieder in das Wirbelbett 6 im ersten Reaktorbehälter 4 zurückfallen und dort weiter reduziert werden. Die Gaszuleitungen 7 und 20 sind für den Gasfluß in Parallelanordnung vorgesehen.

Am oberen Ende des weiteren Reaktorbehälters 14 ist dieser mit einer ebenfalls radial nach außen gerichteten, d.h. nach außen auskragenden Aufweitung 21 versehen, wodurch im Abstand oberhalb der Wirbelschicht 15 die Gasgeschwindigkeit stark absinkt, z.B. auf etwa die Hälfte der Geschwindigkeit innerhalb der Wirbelschicht 15, was eine drastische Reduzierung des Staubaustrages mit dem oben über die Ableitung 22 abgeführten verbrauchten Reduktionsgas bewirkt. Das verbrauchte Reduktionsgas wird in einem Zyklon 23 gereinigt, von dem die dabei abgeschiedenen Feinteilchen gegebenenfalls über eine Rückleitung 24 wiederum in die Wirbelschicht 15 des weiteren Reaktorbehälters 14 eingeleitet werden. Der weitere Reaktorbehälter 14 ist mit einer eigenen, als Förderleitung ausgebildeten Austrageinrichtung 25 des in ihm reduzierten Feinerzes 5 versehen.

In der Reduktionseinheit 1 erfolgt eine Trennung des eingesetzten Eisenerzes 5, das einen breiten Korngrößenbereich aufweist (beispielsweise in der Größenordnung von 0,01 bis 8 mm) durch Windsichten mit Hilfe des Reduktionsgases in eine Grobkornfraktion und in eine Feinkornfraktion, also in Fraktionen mit unterschiedlichen Korngrößenverteilungen. Hierdurch gelingt es, die Strömungsverhältnisse für die Fluidisierung und die Verweilzeit des Eisenerzes optimal an den Kornbrand anzupassen.

Feine Teilchen, die aus dem ersten unteren Reaktorbehälter 4 ausgetragen werden, werden infolge der düsenartigen Verengung 12 am Rückfließen in diesen Reaktorbehälter 4 gehindert, da sie durch das durch die Verengung 13 mit erhöhter Geschwindigkeit aufwärts strömende Reduktionsgas wiederum nach oben mitgerissen werden. Durch in den Reduktionsgaszuleitungen 7 und 20 vorgesehene Mengenregelorgane 26 gelingt es, für jede der Fraktionen, also für jede der Wirbelschichten 6 und 15, eine optimale Gasströmung und damit eine optimale Verweilzeit der Erzteilchen im Reduktionsgas sicherzustellen. Damit gelingt es, genau einen vorbestimmten Metallisierungsgrad des Feinerzes, u.zw. sowohl der Feinkorn- als auch der Grobkornfraktion bei geringstmöglichem Reduktionsgasverbrauch, einzustellen, u.zw. innerhalb einer vorgegebenen Zeitspanne.

Die reduzierte und mit der Austrageinrichtung 10 aus dem ersten Reaktorbehälter 4 ausgetragene Grobkornfraktion des Eisenerzes 5 wird über eine als Förderleitung ausgebildete Feststoffaustragseinrichtung 27 weitergefördert. Über die an den Zyklon 23 angeschlossene Leitung 28 erfolgt ein Abzug des gereinigten Gases zusammen mit dem in diesem abgezogenen Gas enthaltenen Reststaub.

Die zweite Reduktionseinheit 2, in der eine weitgehende Fertigreduktion des vorreduzierten Eisenerzes zu Eisenschwamm erfolgt, weist zwei Reaktorbehälter 29, 30 auf, die jedoch separat, d.h. voneinander getrennt, angeordnet sind. Die Förderleitung 27 für die Grobkornfraktion und die Förderleitung 25 für die Feinkornfraktion münden gemeinsam in den ersten der beiden für das zu reduzierende Gut in Serie angeordneten Reaktorbehälter 29, über dessen Boden Reduktionsgas über eine Gaszuleitung 31 zugeführt wird. Auch hier erfolgt eine Windsichtung, und das hierbei abgesonderte vorreduzierte Feinerz, d.h. die Feinkornfraktion, wird über eine am oberen Ende des ersten Reaktorbehälters 29 der zweiten Reduktionseinheit 2 angeordnete Gas-Austragseinrichtung 32 dem zweiten Reaktorbehälter 30 dieser Reduktionseinheit 2 mit dem Reduktionsgas zugeführt.

Nach einer Variante ist es auch möglich, die über die Austragseinrichtung 25 ausgetragene Feinkornfraktion über die Förderleitung 25' direkt in den zweiten Reaktorbehälter 30 der zweiten Reduktionseinheit 2 zuzuführen, wie dies mit strichlierten Linien in Fig. 1 dargestellt ist.

Diesem zweiten Reaktorbehälter 30 wird ebenfalls über dessen Boden Reduktionsgas über eine Zuleitung 33 zugeführt, das in dem sich nach oben erweiternden Dom dieses Reaktorbehälters 30 gemeinsam mit dem über die Gas-Austragseinrichtung 32 aus dem ersten Reaktorbehälter 29 dieser zweiten Reduktionseinheit 2 übergeleiteten Reduktionsgas der ersten Reduktionseinheit 1 zugeführt wird. Jede der für den Gasfluß in Parallelanordnung angeordneten Gas-Zuleitungen 31 und 33 für das Reduktionsgas ist mit Mengenregelorganen 26 ausgestattet.

Die aus dem ersten Reaktorbehälter 29 der zweiten Reduktionseinheit 2 über eine Förderleitung 34 austretende Grobkornfraktion wird einem Einschmelzvergaser 35 mit Hilfe von Schwerkrafteinwirkung zugeleitet. Die aus dem zweiten Reaktorbehälter 30 der zweiten Reduktionseinheit 2 über eine Austragsleitung 36 abgeführte Feinkornfraktion wird dem Einschmelzvergaser 35 über einen am Dom 37 des Einschmelzvergasers 35 angeordneten Brenner 38 zugeleitet. Der Brenner 38 bewirkt ein Agglomerieren der Teilchen der Feinkornfraktion, so daß diese gravimetrisch in die Einschmelzvergasungszone 39 gelangen.

Im Einschmelzvergaser 35 wird in einer Einschnielzvergasungszone 39 aus Kohle und sauerstoffhältigem Gas ein CO- und H₂-hältiges Reduktionsgas erzeugt, das über die Reduktionsgas-Zuleitung 40 den beiden Reaktorbehältern 29, 30 der zweiten Reduktionseinheit 2 zugeleitet wird.

Der Einschmelzvergaser 35 weist eine Zuführung 41 für feste Kohlenstoffträger, eine Zuführung 42 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 35 sammelt sich unterhalb der Einschmelzvergasungszone 39 schmelzflüssiges Roheisen 43 bzw. schmelzflüssiges Stahlvormaterial und schmelzflüssige Schlacke 44, die über einen Abstich 45 abgestochen werden.

Oberhalb der Schlacke 44 kommt es zur Ausbildung eines aus Kohlenstoffträgern (Koks) gebildeten Festbettes I und darüber zur Ausbildung eines Fließbettes II aus groben und darüber aus feinen Kohlenstoffträgerteilchen (Koksteilchen).

In der Reduktionsgas-Zuleitung 40, die vom Einschmelzvergaser 35 ausgeht und in die beiden Reaktorbehälter 29, 30 mündet, ist eine Entstaubungseinrichtung 46, wie ein Heißgaszyklon, vorgesehen, wobei die in diesem Heißgaszyklon 46 abgeschiedenen Staubteile dem Einschmelzvergaser 35 über eine Rückleitung 47 mit Stickstoff als Fördermittel und über einen Brenner 48 unter Einblasen von Sauerstoff zugeführt werden. Der Brenner 48 kann in Höhe des Fließbettes II oder oberhalb des Fließbettes II angeordnet sein.

Zur Einstellung der Reduktionsgastemperatur ist vorzugsweise eine Gasrückführleitung 49 vorgesehen, die von der Reduktionsgas-Zuleitung 40 abzweigt und einen Teil des Reduktionsgases über einen Wäscher 50 und einen Verdichter 51 wiederum in die Reduktionsgas-Zuleitung 40 zurückführt, u.zw. vor dem Heißgaszyklon 46.

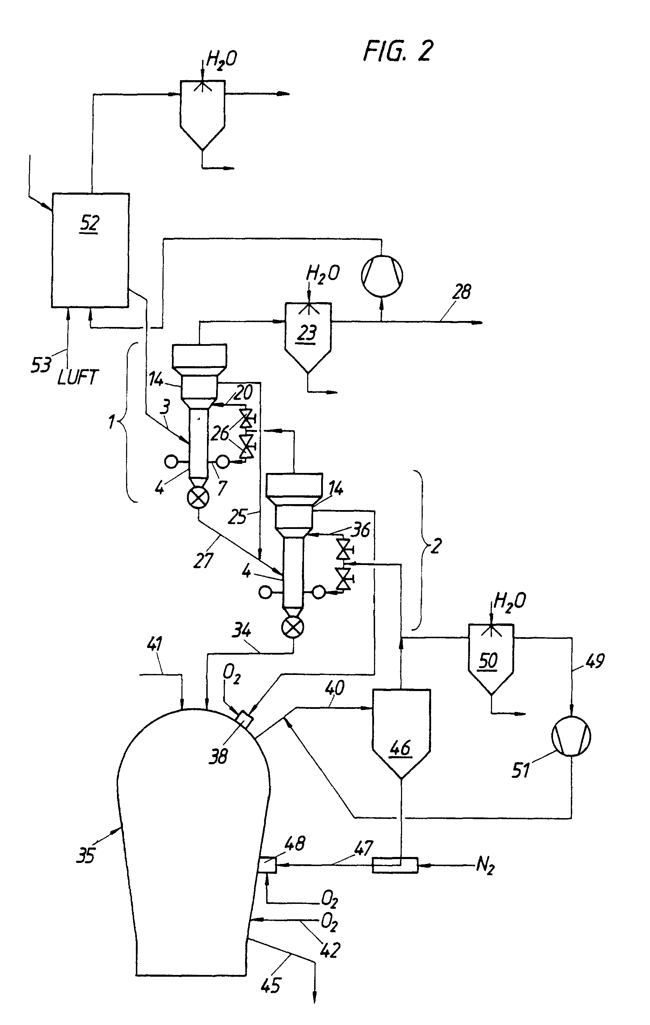

Gemäß der in Fig. 2 dargestellten Ausführungsform, bei der der ersten Reduktionseinheit 1 eine Vorwärmstufe 52 vorgeordnet ist, in die ein Teil des aus der ersten Reduktionseinheit 1 austretenden Topgases als Vorwärmgas sowie Luft über eine Luftzuführleitung 53 zugeführt werden, sind die beiden Reduktionseinheiten 1, 2 untereinander gleich ausgebildet, u.zw. in der Art und Weise wie die erste Reduktionseinheit 1 der in Fig. 1 dargestellten Ausführungsform.

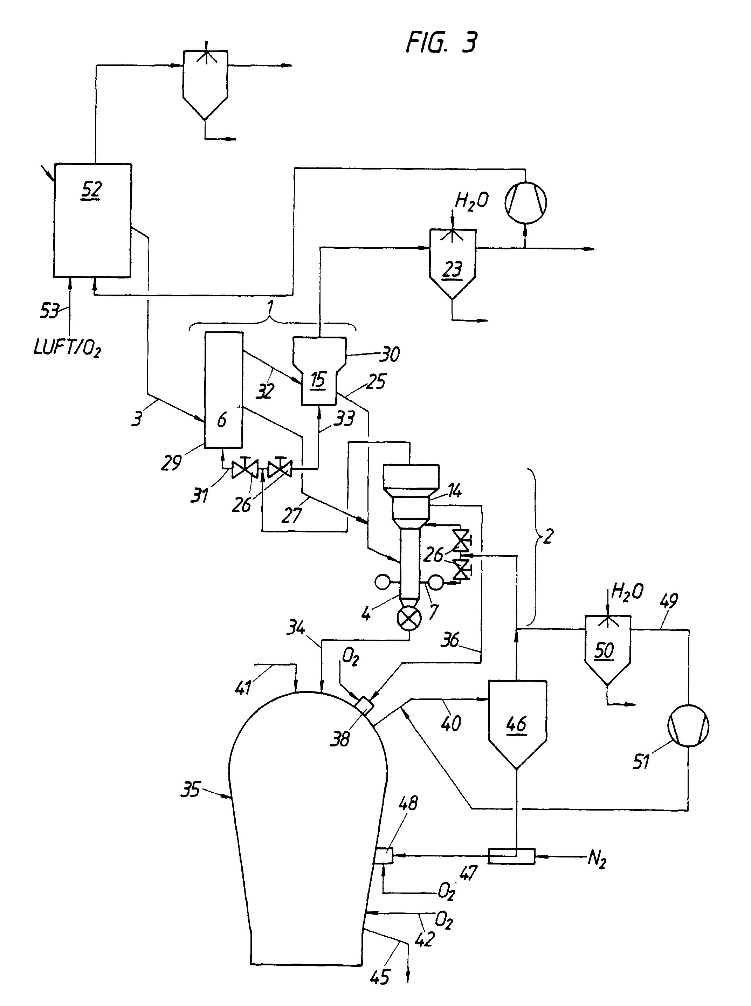

Gemäß Fig. 3 entspricht die erste Reduktionseinheit 1 der zweiten Reduktionseinheit 2 der Ausführungsform nach Fig. 1 und die zweite Reduktionseinheit 2 der ersten Reduktionseinheit 1 der Ausführungsform nach Fig. 1.

Fig. 4 zeigt ein Detail der Anlage nach einer Variante, gemäß der die fertigreduzierte Feinkornfraktion in den Einschmelzvergaser 35 nicht über einen Brenner 38, sondern direkt eingeleitet wird. In der Nähe der Einmündung der Austragsleitung 36 in den Innenraum des Einschmelzvergasers 35 mündet eine Sauerstoff-Zuführleitung 42', so daß auch gemäß dieser Variante eine sofortige Agglomeration der Teilchen der Feinkornfraktion stattfinden kann und ein Austragen derselben über das aus dem Einschmelzvergaser 35 abgeleitete Reduktionsgas verhindert wird. Eine Einmündung der Austragsleitung 36 kann auch in einem tiefer gelegenen Teil des Einschmelzvergasers 35 vorgesehen sein, wie dies in Fig. 4 strichliert durch die Leitung 36' und die strichliert angedeutete Sauerstoff-Zuführleitung 42"dargestellt ist.

Erfindungsgemäß ergeben sich prozeßtechnische Vorteile; ein wichtiger ist vor allem in der relativ scharf und exakt einstellbaren Trennung in eine Grob- und eine Feinkornfraktion zu sehen, wodurch es gelingt, einen möglichst hohen Anteil gravimetrisch direkt zu chargieren und nur der unbedingt notwendige Anteil über den Brenner 38 bzw. eine sauerstoffangereicherte Stelle in den Einschmelzvergaser 35 zu chargieren ist. Hierdurch ist nur eine geringe Brennerleistung notwendig, was wiederum zu einer geringen Temperaturbelastung im Dom 37 des Einschmelzvergasers 35 führt. so daß der gesamte Energieverbrauch gering ist und das Reduktionsgas nur relativ wenig gekühlt werden muß. Hierdurch sinkt auch die Gefahr des Auftretens von Sticking. Die Feinkornfraktion wird beim Einbringen aufgeschmolzen, so daß eine Staubanreicherung im Einschmelzvergaser vermieden wird. Die Energie zum Schmelzen der Feinkornfraktion wird über die folgende chemische Reaktion freigesetzt, so daß der Brenner ohne zusätzlichen Kohlenstoffbedarf betrieben werden kann: 2Fe + O₂ = 2FeO Die Erfindung beschränkt sich nicht auf die in der Zeichnung dargestellten Ausführungsbeispiele, sondern sie kann in verschiedener Hinsicht modifiziert werden. Hinsichtlich der Anzahl der Reduktionsstufen bzw. Reduktionseinheiten hat der Fachmann die freie Wahl. Er kann diese je nach gewünschtem Prozeßablauf und in Abhängigkeit der Einsatzstoffe wählen.

## Patentansprüche

1. Verfahren zum Herstellen von flüssigem Roheisen (43) oder flüssigen Stahlvorprodukten aus von Eisenerz (5) und Zuschlägen gebildeten, zumindest teilweise einen Feinanteil aufweisenden Einsatzstoffen, wobei das Eisenerz in mindestens zwei Reduktionsstufen (1, 2) im Wirbelschichtverfahren zu Eisenschwamm direkt reduziert wird, der Eisenschwamm in einer Einschmelzvergasungszone (39) unter Zufuhr von Kohlenstoffträgern und sauerstoffhältigem Gas erschmolzen und ein CO- und H₂-hältiges Reduktionsgas erzeugt wird, welches in Reduktionszonen der Reduktionsstufen (1, 2) eingeleitet, dort umgesetzt, als Topgas abgezogen und gegebenenfalls einem Verbraucher zugeführt wird, dadurch gekennzeichnet:
• daß jede der beiden Reduktionsstufen (1, 2) zwei gesonderte Wirbelschichten (6, 15) aufweist, wobei in einer ersten Reduktionsstufe (1) das Eisenerz (5) mit Hilfe des Reduktionsgases in mindestens zwei Fraktionen mit jeweils unterschiedlichen Korngrößenverteilungen, nämlich in mindestens eine Grobkornfraktion und mindestens eine Feinkornfraktion, fraktioniert wird,
• daß jede Fraktion in einer eigenen Wirbelschicht (6, 15) mit dem Reduktionsgas reduziert wird, wobei
• das Reduktionsgas eine erste, die Grobkornfraktion enthaltende Wirbelschicht (6) aufrecht erhält und aus dieser die Feinkornfraktion abscheidet,
• und wobei weiters in die weitere Wirbelschicht (15) zusätzlich Reduktionsgas direkt eingeleitet wird, u.zw. in einer eine Reduktion der Feinkornfraktion in dieser Wirbelschicht (15) auf einen vorbestimmten Metallisierungsgrad innerhalb einer vorgegebenen Zeitspanne sichernden Menge bzw. chemischen Zusammensetzung, und
• daß reduziertes Eisenerz (5) sowohl aus der ersten als auch aus der weiteren Wirbelschicht (6, 15) ausgetragen wird und
• daß die in der ersten Reduktionsstufe (1) reduzierte Fein- und Grob kornfraktion in mindestens einer in gleicher Weise wie die erste Reduktionsstufe (1) arbeitende weiteren Reduktionsstufe (2) weiterreduziert werden und aus der letzten Reduktionsstufe (2) die Feinkornfraktion in die Einschmelzvergasungszone (39) unter Agglomeration durch Sauerstoffbeistellung, vorzugsweise mittels eines Brenners (38), zugeführt und die Grobkornfraktion gravitierend in die Einschmelzvergasungszone (39) direkt zugeführt werden.

2. Verfahren nach Anspruch 1, dadurch gekennzeichnet, daß in beiden Reduktionsstufen (1, 2) die Korngrößenverteilung der abgeschiedenen Feinkornfraktion in Abhängigkeit der Gesamtkorngrößenverteilung durch Einstellung der pro Zeiteinheit in die erste Wirbelschicht (6) zugeführten Reduktionsgasmenge eingestellt wird und gleichzeitig der Reduktionsgrad der Feinkornfraktion durch Einstellen der dieser Fraktion zusätzlich direkt zugeführten Menge an Sekundär-Reduktionsgas eingestellt wird.

3. Verfahren nach Anspruch 1 oder 2, dadurch gekennzeichnet, daß die in der ersten Reduktionsstufe (1) reduzierte Fein- und Grobkornfraktion gemeinsam in der ersten Wirbelschicht (6) der weiteren Reduktionsstufe (2) weiterreduziert werden und die Feinkornfraktion erneut abgesondert und der weiteren Wirbelschicht (15) zugeführt und dort weiterreduziert wird.

4. Verfahren nach einem oder mehreren der Ansprüche 1 bis 3, dadurch gekennzeichnet, daß die in der ersten Reduktionsstufe (1) reduzierte Feinkornfraktion der weiteren Wirbelschicht (15) der weiteren Reduktionsstufe (2) direkt zugeführt und dort weiterreduziert wird.

5. Verfahren nach einem oder mehreren der Ansprüche 1 bis 4, dadurch gekennzeichnet, daß die Feinkornfraktion in die Einschmelzvergasungszone (39) anstatt über einen Brenner (38) in unmittelbarer Nähe einer in die Einschmelzvergasungszone mündenden Sauerstoffeinbringung eingebracht wird (Fig. 4).

6. Anlage zur Durchführung des Verfahrens nach einem oder mehreren der Ansprüche 1 bis 5, mit mindestens zwei in Serie angeordneten Reduktionseinheiten (1, 2), von denen in einen ersten Reaktorbehälter (4, 29) eine Förderleitung (3) für Eisenerz (5) und Zuschläge enthaltende Einsatzstoffe, eine Gaszuleitung (7) für ein Reduktionsgas sowie eine Förderleitung (27) für das in ihm gebildete Reduktionsprodukt, die zu einer weiteren Reduktionseinheit (2) mit Reaktorbehälter (29) führt, und eine Gasableitung (22) für das Topgas münden, wobei die Gaszuleitung (7) für das Reduktionsgas eine Gasableitung für Reduktionsgas aus der weiteren Reduktionseinheit (2) bildet und eine weitere Förderleitung (34) für das in der weiteren Reduktionseinheit (2) gebildete Reduktionsprodukt in einen Einschmelzvergaser (35) mündet, der Zuleitungen (41, 42) für sauerstoffhältige Gase und Kohlenstoffträger sowie einen Abstich (45) für Roheisen (43) bzw. Stahlvormaterial und Schlacke (44) aufweist, wobei die in die weitere Reduktionseinheit (2) mündende Reduktionsgas-Zuleitung (40) für im Einschmelzvergaser (35) gebildetes Reduktionsgas vom Einschmelzvergaser (35) ausgeht, dadurch gekennzeichnet, daß die Reduktionseinheiten (1, 2) jeweils mindestens zwei in Flußrichtung des Eisenerzes (5) in Serie angeordnete Reaktorbehälter (4, 14; 29, 30) aufweisen, die jeweils eine eigene Wirbelschicht (6, 15) enthalten und zu denen jeweils eine Gaszuleitung (7, 20; 31, 33) für das Reduktionsgas in Parallel-Anordnung führt, wobei eine Reduktionsgas-Austragseinrichtung (12, 32) von dem in Flußrichtung des Eisenerzes ersten Reaktorbehälter (4; 29) in den zweiten für die Feinkornfraktion des zu reduzierenden Eisenerzes (5) vorgesehenen Reaktorbehälter (14; 30) derselben Reduktionseinheit (1 bzw. 2) führt und von jedem Reaktorbehälter (4, 14; 29, 30) eine Förderleitung (25, 27, 34, 36) für das Reduktionsprodukt ausgeht, und wobei weiters die beiden aus der ersten Reduktionseinheit (1) führenden Förderleitungen (25, 27) in die weitere Reduktionseinheit (2) münden und die von der weiteren Reduktionseinheit (2) - im Falle, daß diese die letzte Reduktionseinheit bildet - ausgehenden Förderleitungen (25, 27) getrennt zum Einschmelzvergaser (35) führen, u.zw. eine von dem ersten Reaktorbehälter (4; 29) der letzten Reduktionseinheit (2) ausgehende Förderleitung (34) in den Einschmelzvergaser (35) direkt mündet und eine von dem zweiten Reaktorbehälter (14; 30) der letzten Reduktionseinheit (2) ausgehende Förderleitung (36) in den Einschmelzvergaser (35) an einer sauerstoffangereicherten Stelle, vorzugsweise über einen Brenner (38), mündet.

7. Anlage nach Anspruch 6, dadurch gekennzeichnet, daß die beiden aus der ersten Reduktionseinheit (1) führenden Förderleitungen (25, 27) gemeinsam in die weitere Reduktionseinheit (2) münden.

8. Anlage nach Anspruch 6, dadurch gekennzeichnet, daß die aus dem weiteren Reaktorbehälter (14) einer Reduktionseinheit (1) führende Förderleitung (25) direkt in den weiteren Reaktorbehälter (30) der nachgeordneten Reduktionseinheit (2) mündet.

9. Anlage nach Anspruch 6, 7 oder 8, dadurch gekennzeichnet, daß der ersten Reduktionseinheit (1) ein Vorwärmgefäß (52) für das Eisenerz (5) vorgeordnet ist, in das eine Topgas aus der ersten Reduktionseinheit führende Gasleitung mündet.

## Claims

1. A process for the production of liquid pig iron (43) or liquid steel pre-products from charging substances formed of iron ore (5) and fluxes and at least partially containing a portion of fines, wherein the iron ore is directly reduced to sponge iron in at least two reduction stages (1, 2) by the fluidized-bed method, the sponge iron is melted in a melt-down gasifying zone (39) under supply of carbon carriers and oxygen-containing gas, and a CO and H₂-containing reducing gas is produced which is injected into reduction zones of the reduction stages (1, 2), is reacted there, is withdrawn as a top gas and optionally is supplied to a consumer, characterized in that:
• each of the two reduction stages (1, 2) has two separate fluidized beds (6, 15), wherein in a first reduction stage (1) the iron ore (5) by aid of the reducing gas is fractionated into at least two fractions having different grain-size distributions each, namely into at least one coarse-grain fraction and at least one fine-grain fraction,
• that each fraction is reduced by the reducing gas in a separate fluidized bed (6, 15), wherein
• the reducing gas maintains a first fluidized bed (6) containing the coarse-grain fraction and separates the fine-grain fraction from the same,
• and wherein, further, reducing gas is additionally introduced into the further fluidized bed (15) directly in an amount and/or chemical composition such that reduction of the fine-grain fraction in this fluidized bed (15) to a predetermined degree of metallization within a predetermined period of time is ensured, and
• that reduced iron ore (5) is discharged both from the first and from the further fluidized bed (6, 15) and
• that the fine-grain and coarse-grain fractions reduced in the first reduction stage (1) are further reduced in at least one further reduction stage (2) operating in the same manner as the first reduction stage (1) and from the last reduction stage (2) the fine-grain fraction is introduced into the melt-down gasifying zone (39) while being agglomerated by supply of oxygen, preferably by means of a burner (38), and the coarse-grain fraction is fed directly into the melt-down gasifying zone (39) gravitationally.

2. A process according to claim 1, characterized in that in both reduction stages (1, 2) the grain-size distribution of the separated fine-grain fraction is adjusted as a function of the overall grain-size distribution by adjusting the amount of reducing gas supplied to the first fluidized bed (6) per time unit and, at the same time, the degree of reduction of the fine-grain fraction is adjusted by adjusting the amount of secondary reducing gas which is additionally supplied to this fraction directly.

3. A process according to claim 1 or 2, characterized in that the fine-grain and coarse-grain fractions reduced in the first reduction stage (1) are further reduced in the first fluidized bed (6) of the further reduction stage (2) together and the fine-grain fraction is separated again and supplied to the further fluidized bed (15) and further reduced there.

4. A process according to one or several of claims 1 to 3, characterized in that the fine-grain fraction reduced in the first reduction stage (1) is supplied to the further fluidized bed (15) of the further reduction stage (2) directly and is further reduced there.

5. A process according to one or several of claims 1 to 4, characterized in that instead of via a burner (38) the fine-grain fraction is introduced into the melt-down gasifying zone (39) in close proximity to an oxygen feeding means opening into the melt-down gasifying zone (Fig. 4).

6. A plant for carrying out the process according to one or several of claims 1 to 5, comprising at least two reduction units (1, 2) arranged in series, from which there run into a first reactor vessel (4, 29) a conveying duct (3) for charging substances containing iron ore (5) and fluxes, a gas feed duct (7) for a reducing gas as well as a conveying duct (27) destined for the reduction product formed in said reactor vessel and leading to a further reduction unit (2) with a reactor vessel (29), and a gas discharge duct (22) for the top gas, wherein the gas feed duct (7) for the reducing gas forms a gas discharge duct for reducing gas from the further reduction unit (2) and a further conveying duct (34) for the reduction product formed in the further reduction unit (2) runs into a melter gasifier (35) provided with supply ducts (41, 42) for oxygen-containing gases and carbon carriers as well as with a tap (45) for pig iron (43) or steel pre-material and slag (44), the reducing-gas feed duct (40) for reducing gas formed in the melter gasifier (35), which runs into the further reduction unit (2), departing from the melter gasifier (35), characterized in that each of the reduction units (1, 2) is provided with at least two reactor vessels (4, 14; 29, 30) arranged in series in the direction of flow of the iron ore (5), which each contain a separate fluidized bed (6, 15) and to which one gas feed duct (7, 20; 31, 33) for the reducing gas leads in parallel arrangement, respectively, wherein from the reactor vessel (4; 29) that is first if viewed in the direction of flow of the iron ore a reducing-gas discharging means (12, 32) leads to the second reactor vessel (14; 30) of the same reduction unit (1 or 2), destined for the fine-grain fraction of the iron ore (5) to be reduced, and a conveying duct (25, 27, 34, 36) for the reduction product departs from each reactor vessel (4, 14; 29, 30) and wherein further the two conveying ducts (25, 27) leading out of the first reduction unit (1) run into the further reduction unit (2) and the conveying ducts (25, 27) departing from the further reduction unit (2)―in case this one forms the last reduction unit-lead to the melter gasifier (35) separately, that is, a conveying duct (34) departing from the first reactor vessel (4; 29) of the last reduction unit (2) enters the melter gasifier (35) directly and a conveying duct (36) departing from the second reactor vessel (14; 30) of the last reduction unit (2) enters the melter gasifier (35) at an oxygen-enriched site, preferably via a burner (38).

7. A plant according to claim 6, characterized in that the two conveying ducts (25, 27) leading out of the first reduction unit (1) enter the further reduction unit (2) together.

8. A plant according to claim 6, characterized in that the conveying duct (25) leading out of the further reactor vessel of a reduction unit (1) runs into the further reactor vessel of the subsequently arranged reduction unit (2) directly.

9. A plant according to claim 6, 7 or 8, characterized in that the first reduction unit (1) is preceded by a pre-heating vessel (52) for the iron ore (5), into which there enters a gas duct conducting top gas from the first reduction unit.

## Revendications

1. Procédé pour préparer de la fonte brute liquide (43) ou des demi-produits d'acier liquide à partir de matériaux de charge formés par du minerai de fer (5) et des additifs et contenant au moins en partie des fines, selon lequel on réduit directement le minerai de fer pour former une éponge de fer dans au moins deux étages de réduction (1,2) selon un procédé à lit fluidisé, on fait fondre l'éponge de fer dans une zone de gazéification avec fusion (39) moyennant l'apport de porteurs de carbone et de gaz contenant de l'oxygène et on produit un gaz réducteur contenant du H₂, qui est introduit dans des étages de réduction (1,2), y est converti, est prélevé en tant que gaz primaire et est envoyé éventuellement à un appareil d'utilisation, caractérisé en ce que :
- que chacun des deux étages de réduction (1,2) comporte deux lits fluidisés séparés (6,15), auquel cas dans un premier étage de réduction (1), le minerai de fer (5) est fractionné à l'aide du gaz réducteur en au moins deux fractions possédant des distributions granulométriques respectivement différentes, à savoir en au moins une fraction de grains grossiers en au moins une fraction de grains fins,
caractérisé en ce
- que chaque fraction (6,15) est réduite avec le gaz réducteur dans un lit fluidisé séparé,
- le gaz réducteur maintenant un premier lit fluidisé (6) contenant la fraction de grains grossiers, et la fraction de grains fins se déposant à partir de ce lit fluidisé, et
- d'autre part du gaz réducteur étant introduit en supplément directement dans l'autre lit fluidisé (15), et ce en une quantité ou avec une composition chimique, qui garantit une réduction de la fraction de grains fins dans ce lit fluidisé (15) à un degré prédéterminé de métallisation pendant un intervalle de temps prédéterminé, et
- qu'on extrait le minerai de fer réduit (5) aussi bien du premier lit fluidisé que de l'autre lit fluidisé (6, 15), et
- que la fraction de grains fins et la fraction de gros grains, réduites dans le premier étage de réduction (1), sont réduites de façon supplémentaire, dans au moins un autre étage de réduction (2), qui travaille de la même manière que le premier étage de réduction (1), et la fraction de grains fins est envoyée depuis le dernier étage de réduction (2), dans la zone de gazéification avec fusion (39) avec agglomération par apport d'oxygène, de préférence à l'aide d'un brûleur (38), et la fraction de gros grains est envoyée directement par gravitation dans la zone de gazéification avec fusion (39).

2. Procédé selon la revendication 1, caractérisé en ce que dans les deux étages de réduction (1,2), la distribution granulométrique de la fraction déposée de grains fins est réglée en fonction de la distribution granulométrique globale par réglage de la quantité de gaz réducteur envoyée par unité de temps au premier lit fluidisé, et simultanément le degré de réduction de la fraction de grains fins est réglé par réglage de la quantité, envoyée en supplément directement à cette fraction, de gaz réducteur secondaire.

3. Procédé selon la revendication 1 ou 2, caractérisé en ce que la fraction de grains fins et la fraction de grains grossiers, qui sont réduites dans le premier étage de réduction (1), sont réduites de façon supplémentaire conjointement dans le premier lit fluidisé (6) du second étage de réduction (2) et la fraction de grains fins est à nouveau séparée et est envoyée à l'autre lit fluidisé (15) et y subit une réduction supplémentaire.

4. Procédé selon une ou plusieurs des revendications 1 à 3, caractérisé en ce que la fraction de grains fins. qui est réduite dans le premier étage de réduction (1), de l'autre lit fluidisé (15) est envoyée directement au second étage de réduction (2) et y subit une réduction supplémentaire.

5. Procédé selon une ou plusieurs des revendications 1 à 4, caractérisé en ce que la fraction de grains fins est insérée à proximité directe d'une entrée pour l'oxygène, qui débouche dans la zone de gazéification avec fusion, au lieu que ce soit par l'intermédiaire d'un brûleur (38) (figure 4).

6. Installation pour la mise en oeuvre du procédé selon une ou plusieurs des revendications 1 à 5, comportant au moins deux unités de réduction (1,2) disposées en série, à partir desquelles s'étendent, pour aboutir dans une première enceinte formant réacteur (4,29), une canalisation de transport (3) pour des matériaux de charge contenant du minerai de fer (5) et des additifs, une canalisation d'amenée de gaz (7) pour un gaz réducteur ainsi qu'une canalisation de transport (27) pour le produit de réduction formé dans l'enceinte formant réacteur, qui aboutit à une autre unité de réduction (2) comportant une enceinte formant réacteur (29), et une canalisation d'évacuation de gaz (22) pour le gaz primaire, la canalisation d'amenée de gaz (7) pour le gaz réducteur formant une canalisation d'évacuation de gaz pour le gaz réducteur, partant de l'autre unité de réduction (2), et une autre canalisation de transport (34) pour le produit de réduction formé dans l'autre unité de réduction (2), débouchant dans un dispositif de gazéification avec fusion (35), qui comporte des canalisations d'amenée (41,42) pour des gaz contenant de l'oxygène et pour des porteurs de carbone ainsi qu'une prise (45) pour la fonte brute (43) ou le produit demi-fini en acier et les scories (44), et dans laquelle la canalisation d'amenée de gaz de réduction (40), qui débouche dans l'autre unité de réduction (2), pour le gaz de réduction formé dans le dispositif de gazéification avec fusion (35) s'étend à partir du dispositif de gazéification avec fusion (35), caractérisée en ce que les unités de réduction (1,2) comportent chacune au moins deux enceintes formant réacteurs (4,14;29,30) disposées en série dans la direction de circulation du minerai de fer (5) et qui contiennent chacune un lit fluidisé séparé (6,15) et auxquelles aboutit respectivement une canalisation d'amenée de gaz (7,20;31,33) pour le gaz réducteur, selon une disposition en parallèle, et un dispositif (12,32) d'extraction du gaz réducteur s'étend depuis la première enceinte formant réacteur (4;29), dans la direction de circulation du minerai de fer, pour aboutir à la seconde enceinte formant réacteur (14;30) de la même unité de réduction (1 ou 2), prévue pour la fraction de grains fins du minerai de fer devant être réduit (5), et une canalisation de transport (25,27,34,36) pour le produit de réduction s'étend à partir de chaque enceinte formant réacteur (4,14;29,30), et en outre les deux canalisations de transport (25,27), qui sortent de la première unité de réduction (1), débouchent dans l'autre unité de réduction (2) et les canalisations de transport (25,27), qui partent de la seconde unité de réduction (2) - dans le cas où cette dernière forme la dernière unité de réduction - aboutissent séparément au dispositif de gazéification avec fusion (35), c'est-à-dire qu'une canalisation de transport (34), qui part de la première enceinte formant réacteur (4;29) de la dernière unité de réduction (2), débouche directement dans le dispositif de gazéification avec fusion (35), et une canalisation de transport (36), qui part de la seconde enceinte formant réacteur (14;30) de la dernière unité de réduction (2), débouche dans le dispositif de gazéification avec fusion (35) en un emplacement où s'effectue un enrichissement en oxygène, de préférence par l'intermédiaire d'un brûleur (38).

7. Installation selon la revendication 6, caractérisée en ce que les deux canalisations de transport (25,27), qui sortent de la première unité de réduction (1), débouchent en commun dans l'autre unité de réduction (2).

8. Installation selon la revendication 6, caractérisée en ce que la canalisation de transport (25), qui sort de l'autre enceinte formant réacteur (14) d'une unité de réduction (1), débouche directement dans l'autre enceinte formant réacteur (30) de l'unité de réduction (2) disposée en aval.

9. Installation selon la revendication 6, 7 ou 8, caractérisée en ce qu'en amont de la première unité de réduction (1) est disposé un récipient de préchauffage (52) pour le minerai de fer (5), dans lequel débouche une canalisation de gaz qui introduit le gaz primaire provenant de la première unité de réduction.
